# EUROPÄISCHE PATENTSCHRIFT

(11) **EP 3 420 423 B1**
(45) Veröffentlichungstag und Bekanntmachung des Hinweises auf die Patenterteilung: **21.04.2021**
(21) Anmeldenummer: 17703387.5
(22) Anmeldetag: 02.02.2017
(51) Int. Cl.: B29C 64/00

(54) **VERFAHREN ZUM BEREITSTELLEN EINER FLUIDZUFUHRVORRICHTUNG MITTELS EINES NUMERISCH KONTROLLIERTEN FERTIGUNGSVERFAHRENS UND VERWENDUNG EINER SOLCHEN**
METHOD FOR PROVIDING A FLUID FEEDING DEVICE BY MEANS OF A NUMERICALLY CONTROLLED PRODUCTION PROCESS AND USE OF SUCH A METHOD
PROCÉDÉ DE FOURNITURE D'UN DISPOSITIF D'AMENÉE DE FLUIDE AU MOYEN D'UN PROCÉDÉ DE FABRICATION À COMMANDE NUMÉRIQUE ET UTILISATION ASSOCIÉE

(30) Priorität: 24.02.2016 DE 102016103202
(43) Veröffentlichungstag der Anmeldung: 02.01.2019
(73) Patentinhaber: Klingelnberg AG, 8050 Zürich (CH)
(72) Erfinder: SCHALASTER, Rolf, 42929 Wermelskirchen (DE)
(74) Vertreter: Janke Scholl Patentanwälte PartG mbB
(86) Internationale Anmeldenummer: PCT/EP2017/052267
(87) Internationale Veröffentlichungsnummer: WO 2017/144250

(56) Entgegenhaltungen:
- EP-A1- 2 722 123
- WO-A1-2013/164410
- N N: "MakerBot Replicator USER MANUAL", , 1. Januar 2014 (2014-01-01), Seiten 1-61, XP055372419, Gefunden im Internet: URL:http://download.makerbot.com/replicato r/MB_Replicator_UserManual.pdf [gefunden am 2017-05-12]
- Hyun Suk ET AL: "A Collision Detection for I nteract ive Mechanical Assembly Simulation", Proceedings of the 1997 LEEE Intemational Symposium on Assembly and Task Planning Marina del Rey, 1. Januar 1997 (1997-01-01), XP055372421, Gefunden im Internet: URL:http://ieeexplore.ieee.org/ielx3/4861/ 13422/00615403.pdf?tp=&arnumber=615403&isn umber=13422 [gefunden am 2017-05-12]

## Beschreibung

Die vorliegende Erfindung betrifft Verfahren zum Bereitstellen einer Fluidzufuhrvorrichtung, die zum Kühlen und/oder Schmieren von Bauteilen/Werkstücken während oder nach einer spanenden Bearbeitung geeignet ist. Außerdem geht es um die Verwendung einer Fluidzufuhrvorrichtung.

Es wird die Priorität der Patentanmeldung DE10 2016 103 202.6 beansprucht, die am 24.2.2016 im Namen des vorliegenden Anmelders beim Deutschen Patent- und Markenamt eingereicht wurde.

### Stand der Technik

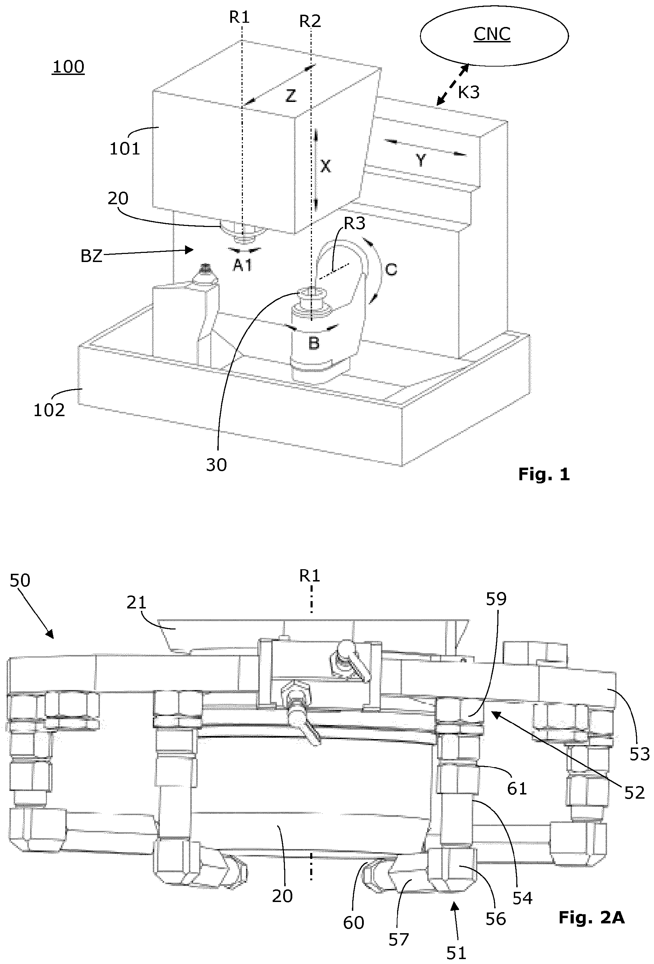

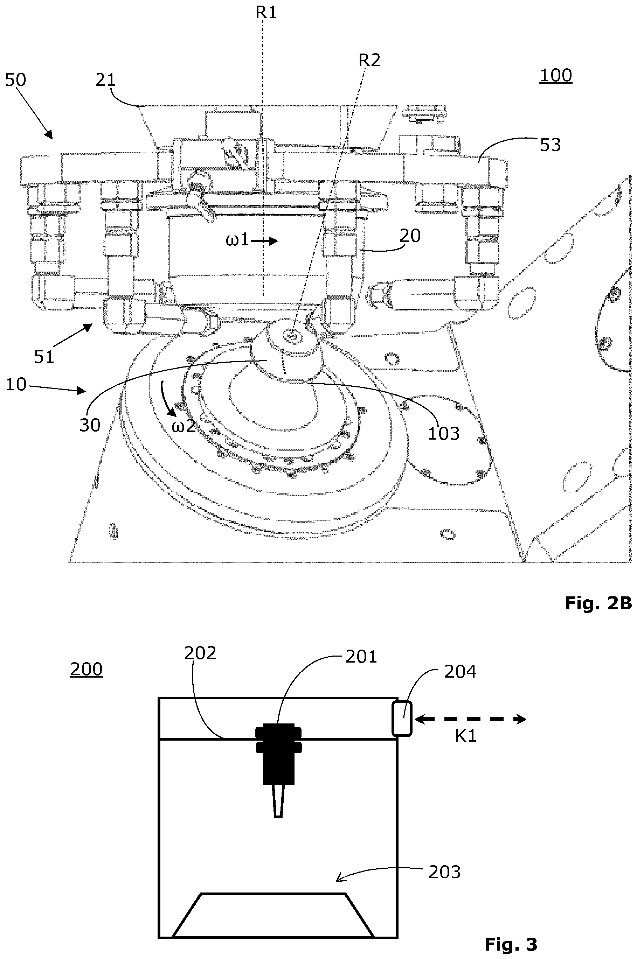

Es ist bekannt bei einer spanenden (Metall-)Bearbeitung (z.B. beim Verzahnungsschleifen) ein Kühl- oder Schmiermittel einzusetzen. Heutige Bearbeitungsmaschinen und -zentren (wie beispielsweise die in Fig. 1 gezeigte Kegelrad-Bearbeitungsmaschine 100) sind daher oft mit einer leistungsfähigen Flüssigmittelversorgung 50 ausgestattet. In den Figuren 2A und 2B sind Details einer konventionellen Fluidzufuhrvorrichtung 50 gezeigt, die mehrere starr aufgebaute Austrittsdüsen 51 umfasst.

Meistens wird ein schwanenhalsartiger Kopf manuell so zusammengebaut und eingestellt, dass der Flüssigkeitsstrahl, der aus dem Kopf austritt, die zu bearbeitenden Stelle z.B. eines Werkstücks 30 trifft (ein beispielhaftes Kegelradwerkstück 30 ist in Fig. 1 gezeigt). Neben der reinen Kühl- oder Schmierwirkung geht es auch darum die Späne, die anfallen, effizient abzutransportieren.

Es hat sich gezeigt, dass die Einstellung der Flüssigmittelversorgung 50 nicht immer optimal ist. Es kann somit unter Umständen nicht die volle Wirkung erzielt werden. Andererseits gibt es immer wieder Situationen, in denen es beim Bewegen der Maschinenachsen (z.B. der Maschine 100) zu einer Kollision mit Elementen der Flüssigmittelversorgung 50 kommt, falls z.B. ein schwanenhalsartiger Kopf nicht in der genau vorbestimmte Position montiert wurde.

Es kann außerdem aufgrund der verschiedenen Teile, die typischerweise beim Aufbau einer Fluidzufuhrvorrichtung 50 zusammengefügt werden müssen, zu Undichtigkeiten kommen.

Eine konventionelle Fluidzufuhrvorrichtung 50 umfasst typischerweise unterschiedlich konfigurierte Austrittsdüsen 51, wobei jede dieser Austrittsdüsen 51 beispielsweise aus einer Steck- oder Schraubkupplung 59 (die z.B. zum Ankoppeln im Bereich einer Andockstelle 52 an eine Ringleitung 53 ausgelegt ist), aus Rohrstücken 54, 57, einem Kniegelenk 56, mindestens einer Überwurfmutter 61 als Schraubverbindung und einem Düsenkopf 60 (der z.B. eine Kugeldüse umfasst) zusammengebaut ist.

In Fig. 5A ist das Beispiel einer weiteren starren Austrittsdüse 51 nach dem Stand der Technik gezeigt EP2722123 offenbart ein computergestütztes Festlegen von mindestens einer möglichen Position für das Anbringen einer Austrittsdüse an der Fluidzufuhrvorrichtung, wobei diese Position außerhalb des 3-dimensionalen Kollisionsbereichs liegt und wobei diese Position eine Direktlinie eines Fluidstrahls zwischen der Austrittsdüse und der Bearbeitungszone ermöglicht. WO2013164410 offenbart ein Verfahren zur 3-dimensionalen Modellierung eines Zahnes, welcher später ausgedruckt und kollisionsfrei zur Reparatur eingesetzt werden soll.

Es stellt sich die Aufgabe einen technischen Ansatz zum besonders effektiven Kühlen und/oder Schmieren von Werkstücken während einer spanenden Bearbeitung bereit zu stellen. Dabei soll für diese Bearbeitung die jeweils optimale Position der Elemente gefunden werden und es sollen Kollisionen vermieden werden.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche.

Das Verfahren der Erfindung ist auf das Bereitstellen einer Fluidzufuhrvorrichtung gerichtet, die speziell zur Verwendung in der Bearbeitungszone der Bearbeitungsmaschine ausgelegt ist.

Gemäß Erfindung geht es um ein Verfahren zum Bereitstellen einer Fluidzufuhrvorrichtung, die speziell zur Verwendung in einer Bearbeitungszone einer Bearbeitungsmaschine ausgelegt ist, um ein Fluid in Richtung eines Wechselwirkungsbereichs zwischen einem Werkzeug und einem Werkstück abzugeben. Das Verfahren umfasst die folgenden Schritte:
a. Rechnergestütztes Definieren der 3-dimensionalen Konfiguration der Bearbeitungszone unter Berücksichtigung des Werkstücks und des Werkzeugs, das zum Bearbeiten des Werkstücks in der Bearbeitungszone der Bearbeitungsmaschine verwendet werden soll,
b. Rechnergestütztes Definieren der 3-dimensionalen Form und der Position mindestens einer spezifisch angepassten Austrittsdüse der Fluidzufuhrvorrichtung unter Einbeziehung von Information, die im Schritt a. definiert wurde,
c. Bereitstellen eines Datensatzes, der die 3-dimensionale Form dieser Austrittsdüse beschreibt,
d. Verwenden des Datensatzes, um diese Austrittsdüse mittels eines nummerisch kontrollierten Fertigungsverfahrens herzustellen.

Die genannten Schritte werden vorzugsweise aber nicht notwendigerweise in der genannten Reihenfolge durchgeführt.

Vorzugsweise kommt bei allen Ausführungsformen ein materialabscheidendes Verfahren als nummerisch kontrolliertes Fertigungsverfahren zum Einsatz. Besonders vorzugsweise handelt es sich um ein 3D-Druckverfahren.

Vorzugsweise wird bei allen Ausführungsformen im Rahmen des Schritts a. die Konfiguration der Bearbeitungszone festgelegt (z.B. durch das Definieren eines 3-dimensionales Raums oder durch das Definieren von Punktewolken). Diese geschieht unter Einsatz eines Rechners und/oder einer CPU der Bearbeitungsmaschine.

Vorzugsweise wird bei allen Ausführungsformen im Rahmen des Schritts b. sowohl die statische als auch die dynamische Relativposition des Werkstücks und des Werkzeugs berücksichtigt, die während des Bearbeitens der Werkstücks mit dem Werkzeug auftreten werden.

Als statische Relativposition wird die Position des Werkstücks in Bezug zum Werkzeug im Ruhezustand bezeichnet. Als dynamische Relativposition wird hingegen die sich mit der Zeit veändernde Relativposition des Werkstücks in Bezug zum Werkzeug bezeichnet. Bei der Definition der dynamische Relativposition werden die Relativbewegungen von Werkstück und Werkzeug und die Rotationsbewegungen von Werkstück und Werkzeug berücksichtigt.

Vorzugsweise wird bei allen Ausführungsformen im Rahmen des Schritts b. eine Kollisionsermittlung vorgenommen, um die 3-dimensionale Form und Position der Austrittsdüse so zu definieren, dass es bei der Verwendung der Austrittsdüse in der Bearbeitungszone nicht zu einer Kollision kommt.

Vorzugsweise wird bei allen Ausführungsformen im Rahmen des Schritts b. eine Strömungsbetrachtung vorgenommen, um die 3-dimensionale Form der Austrittsdüse so zu definieren, dass das Fluid in Form eines direkten Fluidstrahls in Richtung des Wechselwirkungsbereichs zwischen dem Werkzeug und dem Werkstück abgebbar ist. Dabei kann es zum Beispiel darum gehen eine Position und Form der Austrittsdüse zu finden, die es trotz der Relativbewegung des Werkzeugs gegenüber des Werkstücks stets ermöglicht den Fluidstrahl direkt und ohne Ablenkung (d.h. störungsfrei) auf den Wechselwirkungsbereich zu richten

Vorzugsweise kommt bei allen Ausführungsformen eine Software zum Einsatz, die es ermöglicht aus einem Speichermedium und/oder über eine Kommunikationsverbindung mindestens eine Grundform einer Austrittsdüse bereitzustellen. Falls eine vorhandene Grundform für die anstehende Bearbeitung geeignet sein sollte, so braucht kein Datensatz bereitgestellt und es braucht keine spezielle Austrittsdüse angefertigt zu werden. D.h. in diesem Fall erfolgt das Bereitstellen des Datensatzes nur dann, wenn keine der auswählbaren Grundformen aufgrund der aktuellen 3-dimensionalen Konfiguration der Bearbeitungszone geeignet ist. Durch diesen intelligenten Ansatz können Aufwand und Kosten gespart werden.

Vorzugsweise kommt bei allen Ausführungsformen eine Software zum Einsatz, die es ermöglicht aus einem Speichermedium und/oder über eine Kommunikationsverbindung die Daten mindestens eines auswählbaren Rohlings einer Austrittsdüse bereitzustellen. Falls es einen geeigneten auswählbaren Rohling gibt, so wird im Schritt d. der ausgewählte Rohling in eine Fertigungsmaschine eingebracht und durch das nummerisch kontrollierte Fertigungsverfahren angepasst (z.B. durch das Abtragen von Material des Rohlings) oder ergänzt (z.B. durch Einbetten des Rohlings in ein geeignetes Material).

Bei allen Ausführungsformen kann der Datensatz beispielweise an eine Fertigungsmaschine übergeben werden, die sich an einem anderen Standort befindet als der Computer oder als die Bearbeitungsmaschine, auf dem bzw. auf der die Schritte a. bis c. durchgeführt wurden.

Es geht hier auch um die Verwendung mindestens einer Austrittsdüse, die nach dem erfindungsgemässen Verfahren bereitgestellt wurde, als Teil der Fluidzufuhrvorrichtung einer Bearbeitungsmaschine. Dabei kann es z.B. um das ad-hoc Bereitstellen geeigneter, speziell angefertigter Austrittsdüsen, das Verbinden dieser Austrittsdüsen z.B. mit einer Ringleitung oder einer anderen Druckleitung und das Verwenden dieser Konstellation in einer Bearbeitungsmaschine gehen.

Es geht hier vor allem um das Einsetzen eines Kühl- oder Schmiermittels in flüssiger Form oder in Gasform (hier allgemein als Fluid bezeichnet) bei der spanenden Bearbeitung von Werkstücken und insbesondere von Metallwerkstücken. Die Erfindung kann z.B. im Zusammenhang mit der spanenden Nassbearbeitung von Zahnrädern eingesetzt werden.

Die Erfindung ermöglicht das Bereitstellen einer Fluidzufuhrvorrichtung oder einzelner Komponenten einer solchen Fluidzufuhrvorrichtung mit einer hohen Leistungsfähigkeit. D.h. es geht vor allem um ein individuell angepasste Fluidzufuhrvorrichtung mit hoher Förderleistung, die eine möglichst kurze Förderdistanz aufweist. Um eine hohe Förderleistung und eine kurze Förderdistanz gewährleisten zu können, setzt die Erfindung vorzugsweise auf eine starr montierbare Fluidmittelversorgung statt auf flexible Leitungen und schwanenhalsartige schwenkbare Austrittsdüsen.

Um die (einzelnen) Austrittsdüse(n) der starren Fluidzufuhrvorrichtung optimal ausrichten zu können, wird gemäß Erfindung in einem computer-gestützten Optimierungsverfahren für jede der Austrittsdüsen eine geeignete Form sowie Position ermittelt, bevor diese Austrittsdüsen gefertigt werden.

Gemäß Erfindung wird beim Ermitteln der Form und geeigneten Position für eine Austrittsdüse eine Art Kollisionsberechnung durchgeführt, um zu verhindern, dass es zwischen der Austrittsdüse oder anderen Elementen der Fluidmittelversorgung und der Bearbeitungsmaschine (z.B. dem Werkzeug der Bearbeitungsmaschine) zu einer Kollision kommt.

Vorzugsweise wird bei allen Ausführungsformen eine Optimierungsberechnung der Fluidmittelvorrichtung durchgeführt, die einerseits zu einem weniger stark ausgeprägten Verschleißverhalten der Werkzeuge führt. Andererseits kann das Einrichten der Bearbeitungsmaschine schneller ausgeführt werden und es werden Fehleinstellungen verhindert, die zu einer Kollision von Bauteilen der Fluidmittelvorrichtung mit dem Werkzeug oder Werkstück führen können.

Das Verfahren der Erfindung bietet somit zahlreiche Vorteile, die sich z.B. als Verkürzung der Stillstandszeit der Bearbeitungsmaschine zeigen. Die Stillstandszeit der Bearbeitungsmaschine kann nämlich deutlich reduziert werden, wenn bereits im Vorfeld die geeignete Form und Position der Austrittsdüsen der Fluidmittelvorrichtung ermittelt wurde und wenn die speziell angefertigten Austrittsdüsen so bereitgestellt werden, das sie lediglich an der geeigneten Position z.B. mit einer Ringleitung oder einem anderen Leitungsgerüst verbunden werden müssen. Außerdem wird die Fehlerhäufigkeit reduziert.

Das Verfahren der Erfindung kann nicht nur im Zusammenhang mit Anlagen eingesetzt werden, die zum Kühlen oder Schmieren dienen, sondern es können so auch Anlagen/Konfigurationen erstellt werden, die zu Reinigungszwecken geeignet sind. D.h., die Erfindung lässt sich auf verschiedene Austrittsdüsen und/oder Fluide anwenden, unabhängig davon, ob es um das Schmieren, Kühlen oder Reinigen geht.

Das Verfahren der Erfindung kann nicht nur bei der spanabhebenden (Metall-)Bearbeitung von Werkstücken zum Einsatz kommen, sondern es kann zum Beispiel auch beim Abrichten von Werkzeugen mit einem Abrichtwerkzeug (z.B. mit einer Abrichtscheibe) eingesetzt werden. Das Verfahren lässt sich auch beim (Nach-)Schleifen von Werkzeugen (z.B. Stabmessern) oder beim Entgraten von Werkstücken einsetzen. In diesen Fällen handelt es sich bei dem sogenannten Werkstück um ein Bauteil oder um ein Werkzeug, das zu bearbeiten ist. Der Begriff Werkstück ist daher entsprechend breit auszulegen. Im Folgenden wird das Werkstück daher auch als zu bearbeitendes Bauteil bezeichnet.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.
- **FIG. 1**: zeigt eine perspektivische Abbildung einer mehrachsigen Schleifmaschine in der die Erfindung beispielsweise zum Einsatz kommen kann;
- **FIG. 2A**: zeigt eine perspektivische Ansicht eines Teils einer Schleifmaschine (z.B. einer Schleifmaschine nach Fig. 1), wobei das unmittelbare Umfeld eines Schleiftopfs und einer starr angeordneten konventionellen Fluidmittelversorgung gezeigt ist;
- **FIG. 2B**: zeigt eine perspektivische Ansicht eines größeren Ausschnitts der Fig. 2A, wobei zusätzlich zum Schleiftopf und der starr angeordneten Fluidmittelversorgung auch eine schräg angestellte Werkstückspindel mit Werkstück (hier ein Kegelrad) gezeigt sind;
- **FIG. 3**: zeigt das Symbol einer Maschine (materialabscheidende Maschine), die zum Ausführen eines materialabscheidenden Verfahrens ausgelegt ist;
- **FIG. 4**: zeigt eine schematische Ansicht einer beispielhaften Gesamtanlage der Erfindung (abgeleitet von der Schleifmaschine nach Fig. 1), wobei einige Elemente der Erfindung mit der Schleifmaschine verbindbar sind;
- **FIG. 5A**: zeigt eine perspektivische Ansicht einer Austrittsdüse gemäß dem Stand der Technik;
- **FIG. 5B**: zeigt eine perspektivische Ansicht einer Austrittsdüse der Erfindung;
- **FIG. 6A**: zeigt eine Ansicht einer weiteren Fluidmittelversorgung (mit Blickrichtung von unten auf einen Schleiftopf), wobei diese Fluidmittelversorgung zwei konventionelle Austrittsdüsen umfasst;
- **FIG. 6B**: zeigt eine Ansicht einer Fluidmittelversorgung (mit Blickrichtung von unten auf einen Schleiftopf), wobei diese Fluidmittelversorgung eine erfindungsgemäss gefertigte Austrittsdüse umfasst;
- **FIG. 7**: zeigt eine schematische Darstellung einzelner beispielhafter Schritte der Erfindung,
- **FIG. 8**: zeigt eine Ansicht einer beispielhaften Austrittsdüse der Erfindung von unten betrachtet;
- **FIG. 9**: zeigt eine schematische Darstellung einzelner beispielhafter Schritte der Erfindung.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um das Kühlen und/oder Schmieren im Zusammenhang mit einem spanabhebenden Verfahren zum Bearbeiten von Werkstücken 30. Insbesondere geht es bei dem spanabhebenden Verfahren um das Bearbeiten von Metallwerkstücken 30, wie zum Beispiel Zahnrädern, Wellen, Kupplungsteilen und dergleichen.

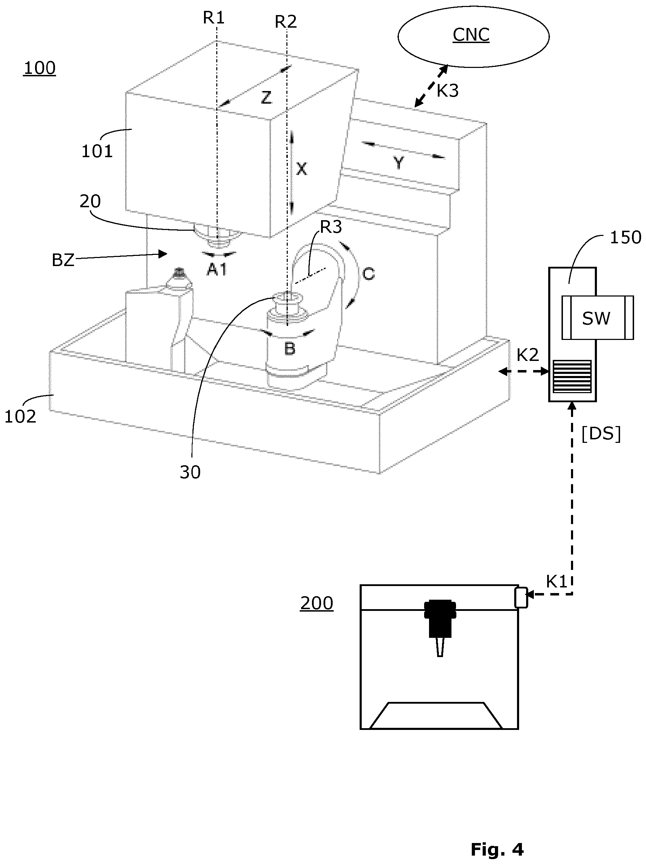

Das Verfahren der Erfindung ist speziell zum Einsatz im Umfeld einer Bearbeitungsmaschine 100 ausgelegt, in der ein Bauteil/Werkstück 30 spanabheben bearbeitet wird. Eine beispielhafte Bearbeitungsmaschine 100 ist in Fig. 1 mit seinen wesentlichen Elementen gezeigt. In Fig. 1 ist eine (Kegelrad-) Schleifmaschine 100 gezeigt. In Fig. 4 ist eine beispielhafte Bearbeitungsmaschine 100 gezeigt, die erfindungsgemäss ausgestattet ist. In den Figuren 1 und 4 werden für dieselben Teile die gleichen Bezugszeichen verwendet.

Die Erfindung kommt beispielweise im Zusammenhang mit Bearbeitungsmaschinen 100 zum Einsatz, die mit einer CNC gesteuerten Werkzeugachse R1 und einer CNC gesteuerten Werkstückachse R2 ausgestattet sind. Die in Fig. 1 und 4 gezeigte Bearbeitungsmaschine 100 hat beispielsweise sechs CNC gesteuerte Achsen und sie umfasst eine CNC-Steuerung, die hier andeutungsweise durch ein Oval dargestellt ist. Die Kommunikationsverbindung zwischen der CNC-Steuerung und den Achsen der Bearbeitungsmaschine 100 ist schematisch durch einen Doppelpfeil K3 dargestellt.

Bei den genannten Achsen handelt es sich beispielsweise um
- eine Linearachse X, die Vertikalbewegungen eines Werkzeugträgers 101 in Bezug zu einem Maschinenbett 102 ausführt;
- eine Linearachse Y, die erste Horizontalbewegungen des Werkzeugträgers 101 in Bezug zu dem Maschinenbett 102 ausführt;
- eine Linearachse Z, die zweite Horizontalbewegungen des Werkzeugträgers 101 in Bezug zu dem Maschinenbett 102 ausführt, wobei die ersten Horizontalbewegungen senkrecht zu den zweiten Horizontalbewegungen verlaufen;
- eine Schwenkachse C, die eine Schwenkbewegung einer Werkstückspindel 103 und eines daran befestigten (z.B. eingespannten) Werkstücks 30 um eine Horizontalachse R3 ausführt;
- eine Rotationsachse B, die eine Drehbewegung der Werkstückspindel 103 und des daran gelagerten Werkstücks 30 um die Werkstückachse R2 ausführt;
- eine Rotationsachse A1, die eine Drehbewegung einer Werkzeugspindel 21 und eines daran gelagerten Werkzeugs 20 um die Werkzeugachse R1 ausführt.

Diese Bewegungen werden beim Definieren der dynamischen Relativposition des Werkstücks und des Werkzeugs berücksichtigt.

Außerdem umfasst die Bearbeitungsmaschine 100 eine Fluidzufuhrvorrichtung 50, die unter Druck ein Fluid durch mindestens eine Austrittsdüse 51 in Richtung einer Bearbeitungszone BZ abgibt. Die Fluidzufuhrvorrichtung 50 ist nicht in Fig. 1 gezeigt. Die Fluidzufuhrvorrichtung 50 des Standes der Technik ist mit den Bezugszeichen 50 und folgende bezeichnet, die Fluidzufuhrvorrichtung der Erfindung trägt hingegen die Bezugszeichen 250 und folgende.

Um eine hohe Förderleistung und eine kurze Förderdistanz gewährleisten zu können, setzt die Erfindung vorzugsweise auf eine starr montierbare Fluidzufuhrvorrichtung 250 statt auf flexible Leitungen und schwanenhalsartig schwenkbare Auslassdüsen. Es ist aufwendiger flexible Leitungen stets exakt gleich einzustellen. Eine Konfiguration mit starrer Ringleitung 53 (siehe z.B. Fig. 2A) ist einfacher wieder exakt gleich einzustellen, um bei jeder Bearbeitung des speziellen Werkstücks 30 wieder die gleichen Bedingungen vorgeben zu können.

Details einer konventionellen Fluidzufuhrvorrichtung 50 sind den Figuren 2A und 2B zu entnehmen. Eine solche Fluidzufuhrvorrichtung 50 umfasst mindestens einen Fluidtank (nicht gezeigt), eine Pumpe (nicht gezeigt) und mindestens eine Leitung, um ein Fluid aus dem Tank zu entnehmen und in eine Austrittsdüse 51 zu pumpen. Von dort spritzt das Fluid im Bereich der Bearbeitungszone BZ z.B. auf denjenigen Bereich, in dem im Moment vom Werkzeug 20 Späne am Werkstück 30 abgehoben werden (z.B. beim Verzahnungsfräsen) oder in denjenigen Bereich, in dem im Moment vom Werkzeug 20 Späne am Werkstück 30 abgeschliffen werden (z.B. beim Verzahnungsschleifen).

Typischerweise sitzt die Fluidzufuhrvorrichtung 50 bzw. 250 am Werkzeugträger 101 und bewegt sich solidarisch mit diesem. D.h. die Fluidzufuhrvorrichtung 50 bzw. 250 folgt den Bewegungen im 3-dimensionalen Raum, die das Werkzeug 20 ausführt, wobei sich die Fluidzufuhrvorrichtung 50 bzw. 250 nicht mit der Werkzeugspindel 21 und dem Werkzeug 20 dreht. In Fig. 2A und Fig. 2B ist zu erkennen, dass die Werkzeugspindel 21 samt Werkzeug 20 eine rotationssymmetrische Umhüllende haben kann. Diese Umhüllende beschreibt denjenigen 3-dimensionalen Raum, in dessen Rotationszentrum die Werkzeugachse R1 sitzt und der entweder vollständig von der Werkzeugspindel 21 samt Werkzeug 20 ausgefüllt ist (das ist z.B. bei einem Schleiftopf 20 nach Fig. 2A und Fig. 2B der Fall), oder der beim Rotieren eines Vollwerkzeugs mit Schneiden, oder eines Messerkopfs, der mit (Stab-)Messern bestückt ist, überstrichen wird. Wenn man sich außerhalb dieser Umhüllenden befindet und sich solidarisch mit dem Werkzeugträger 101 bewegt, ergibt sich keine Kollision mit dem Werkzeug 20 während sich dieses um die Werkzeugachse R1 dreht.

Entsprechend ist in Fig. 2A zu erkennen, dass die Fluidzufuhrvorrichtung 50 z.B. ringförmig um die Spindel 21 herum angeordnet sein kann und dass die Austrittsdüse(n) 51 direkt neben der Umhüllenden oder unterhalb einer Stirnseite der Umhüllenden sitzen können, ohne mit dem sich drehenden Werkzeug 20 zu kollidieren.

Der Begriff "Austrittsdüse 251" wird hier wie folgt verwendet. Es kann sich um eine komplette Düse handeln, die an eine (Ring-)Leitung 53 oder an einer andere Leitung (z.B. einen Schlauch oder Rohr) ankoppelbar ist, oder es kann sich um den Endabschnitt einer kompletten Düse handeln. Im letzteren Fall ist der Endabschnitt (hier auch Düsenkopf genannt) vorzugsweise bei allen Ausführungsformen zum Ankoppeln an eine Düsenbasis ausgelegt. Eine solche Düsenbasis kann bei allen Ausführungsformen an eine (Ring-)Leitung 53 oder an eine andere Leitung (z.B. einen Schlauch oder Rohr) ankoppelbar sein.

Vorzugsweise geht es bei den Austrittsdüsen 251 der Erfindung um Hochdruckdüsen, die speziell zum Abgeben von Kühlflüssigkeit und/oder Schmierflüssigkeit ausgelegt sind. Diese Flüssigkeit(en) wird/werden hier allgemein als Fluid bezeichnet.

Die Austrittsdüsen 251 können bei allen Ausführungsformen (z.B. als Düsenbasis) ein kegliges, selbstdichtendes Einschraubgewinde an der Eintrittsseite (Andockstelle 252 genannt) aufweisen. Vorzugsweise kommen bei allen Ausführungsformen standardisierte Einschraubgewinde, Einpressfassung oder Steck- oder Schraubkupplung 259 zum Einsatz, damit stets dieselbe Schnittstelle zum Ankoppeln der Austrittsdüsen 251 verwendet werden kann.

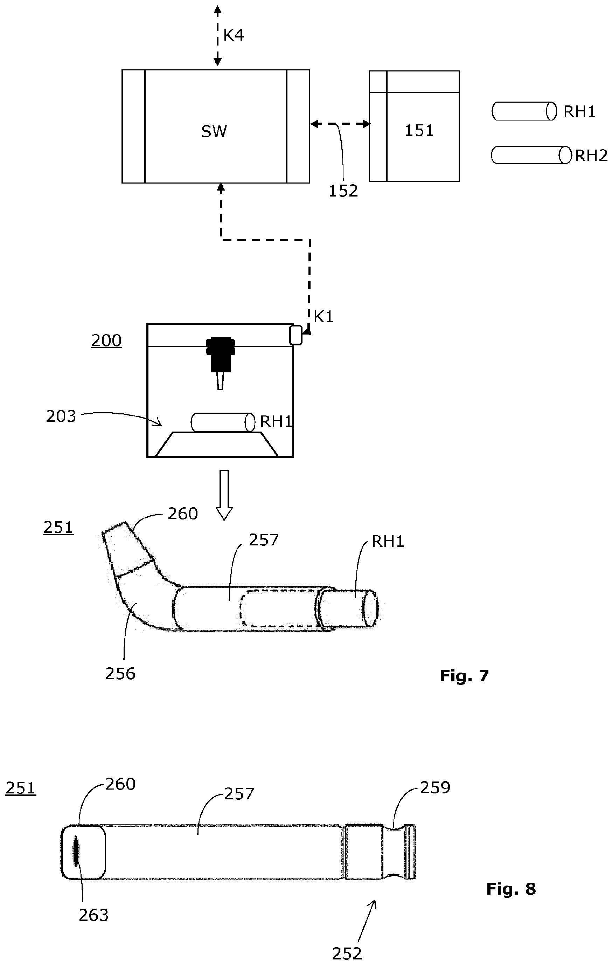

Der Endabschnitt (Düsenkopf 260) kann vorzugsweise bei allen Ausführungsformen so ausgelegt werden, dass er einen festen Fluidstrahl abgibt, oder dass er das Fluid beim Austritt aus der Austrittsdüse 251 zerstäubt oder auffächert. Eine Software SW (siehe auch Fig. 7), die zum rechnergestützten Definieren der 3-dimensionalen Form und der Position einer spezifisch angepassten Austrittsdüse 251 dient, kann optional bei allen Ausführungsformen die Definition des Austrittsverhaltens des Fluids ermöglichen.

Das Verfahren der Erfindung kann in mehrere Teilschritte zerlegt werden, die im Folgenden mit den Buchstaben a., b., c. etc. bezeichnet sind, wobei diese Bezeichnung nicht zwingend auch der chronologischen Reihenfolge der einzelnen Schritte entspricht, wie sie letztendlich ausgeführt werden.

Im Folgenden werden zu den einzelnen Schritte genauere Angaben gemacht, wobei auch hier die entsprechenden Buchstaben Verwendung finden, ohne dies einschränkend auszulegen.

Schritt a.: In diesem Schritt wird mit der Unterstützung eines Rechners (z.B. unter Einsatz des Rechners 150 und/oder einer CPU der Bearbeitungsmaschine 100) die 3-dimensionale Konfiguration der Bearbeitungszone BZ unter Berücksichtigung des Werkstücks 30 und des Werkzeugs 20 definiert. Bei der genannten Bearbeitungszone BZ geht es um denjenigen Raum der Bearbeitungsmaschine 100, der zum Bearbeiten des Werkstücks verwendet werden soll. Die Bearbeitungszone BZ ist in Fig. 4 mit einem Pfeil bezeichnet.

Im Rahmen des Schritts a. kann bei allen Ausführungsformen die Definition der Bearbeitungszone BZ aus einem Speicher geladen werden. In diesem Fall wurden alle wichtigen Angaben bereits zuvor ermittelt und in dem Speicher abgelegt, um sie später abrufen zu können.

Im Rahmen des Schritts a. kann bei allen Ausführungsformen aber auch die Definition der Bearbeitungszone BZ Schritt für Schritt rechnergesteuert erfolgen. Dies kann z.B. so vorgenommen werden, dass der Benutzer der Software SW auf einem Bildschirm Auswahlmöglichkeiten angeboten bekommt und/oder indem der Benutzer auf einem Bildschirm Eingaben vornehmen muss. Auf diesem Weg kann z.B. Das Werkzeug 20 definiert werden, das zum Einsatz kommen soll, es kann das Werkstück 30 definiert werden und es kann der Maschinentyp der Bearbeitungsmaschine 100 festgelegt werden. Aus diesen Angaben kann die Software SW dann die erforderliche Information zur Definition der Bearbeitungszone BZ ermitteln.

Die Bearbeitungszone BZ kann bei allen Ausführungsformen z.B. in einem Koordinatenbezugssystem definiert sein oder sie kann z.B. als Punktewolke definiert sein.

Beim Definieren der Bearbeitungszone BZ können bereits auch die relativen Bewegungen von Werkzeug 20 und Werkstück 30 berücksichtigt werden (zu diesem Zweck kann beispielsweise in einem Teilschritt eine Kollisionsbetrachtung durchgeführt werden). In diesem Fall beschreibt die Definition der Bearbeitungszone BZ diejenigen verfügbaren Bereich des 3-dimensionalen Raums, der für das Anordnen der Elemente der Fluidzufuhrvorrichtung 250 zur Verfügung stehen.

Schritt b.: In diesem Schritt geht es um das rechnergestützte Definieren der 3-dimensionalen Form und der Position mindestens einer spezifisch angepassten Austrittsdüse 251 der Fluidzufuhrvorrichtung 250. In diesem Schritt b. wird Information verwendet, die zuvor im Schritt a. definiert wurde. D.h. die 3-dimensionale Form und die Position der zu fertigenden Austrittsdüse 251 wird rechnerisch (virtuell) in den verfügbaren Bereich des 3-dimensionalen Raums der Bearbeitungszone BZ eingepasst.

Der Begriff "rechnergestütztes Definieren" wird auch als Modellieren bezeichnet. Das rechnergestützte Definieren kann zum Beispiel mittels der Software SW erfolgen, die auf dem Rechner 150 (siehe Fig. 4) oder in der Bearbeitungsmaschine 100 ausgeführt wird. In Fig. 4 ist eine beispielhafte Ausführungsform gezeigt, bei der ein Rechner 150 über eine Kommunikationsverbindung K2 mit der Bearbeitungsmaschine 100 in Verbindung steht. Die genannte Software SW ist in diesem Ausführungsbeispiel auf dem Rechner 150 installiert und wird in diesem Rechner 150 ausgeführt, wie in Fig.4 schematisch angedeutet.

Vorzugsweise wird bei allen Ausführungsformen beim rechnergestützten Definieren die Form einer Austrittsdüse 251 durch ein ausreichend feines Gitter festgelegt und als Datensatz [DS] bereitgestellt. Die eckigen Klammern sollen ausdrücken, dass die Daten des Datensatzes [DS] in einer geeigneten Form (z.B. gemäß eines Kommunikations- oder Druckprotokolls) codiert sein können.

Umso feiner das Gitter definiert ist, umso feiner wird letztendlich die Oberfläche der zu fertigenden Austrittsdüse 251.

Vorzugsweise liefert der Schritt b. bei allen Ausführungsformen einen Datensatz [DS], der kompatibel ist mit kommerziell erhältlichen Maschinen und CAD-Programmen. Dadurch ist die (Weiter-)Verwendbarkeit des Datensatzes [DS] auch in anderen Maschinen und Programmen gewährleistet. So kann z.B. eine Repräsentation der soeben modellierten Austrittsdüse 251 auf einem Bildschirm angezeigt werden, um dem Benutzer eine optische Plausibilitätskontrolle zu ermöglichen. Der Bildschirm kann beispielsweise mit dem Rechner 150 und/oder der Bearbeitungsmaschine 100 verbunden sein.

Der Begriff "Datensatz" wird hier wie folgt verwendet. Der Datensatz [DS] enthält die entsprechenden Angaben, die notwendig sind um eine gewünschte Austrittsdüse 251 in einer nummerisch-kontrollierten Fertigungsmaschine 200 zu bearbeiten (z.B. ausgehend von einem Rohling RH1, RH2) oder zu komplett zu fertigen. D.h. der Datensatz [DS] dient quasi als Medium zur Geometrieübertragung von einem Rechner 150 oder einer Bearbeitungsmaschine 100, in welcher der Schritt b. durchgeführt wird, zu einer Maschine 200, in welcher der Schritt d. durchgeführt wird.

Der Datensatz [DS] umfasst bei allen Ausführungsformen mindestens die Geometrieinformation der modellierten Austrittsdüse 251 und er kann bei allen Ausführungsformen zusätzlich Materialinformation(en) und/oder Farbinformation(en) umfassen.

Vorzugsweise definiert der Datensatz [DS] bei allen Ausführungsformen die Austrittsdüse 251 als einen geschlossene Körper, der in einem materialaufbauenden Verfahren (auch additive Fertigungsprozesse genannt) fehlerfrei Schicht für Schicht gefertigt werden kann.

Vorzugsweise definiert der Datensatz [DS] bei allen Ausführungsformen die Austrittsdüse 251 als ein räumliches Objekt, das durch eine geschlossene Hülle beschrieben ist, die z.B. aus orientierten (Dreiecks-)Facetten bestehen kann. So werden z.B. gekrümmte Flächen durch Polyeder angenähert. Alle Flächen, aus denen der Körper der Austrittsdüse 251 aufgebaut ist, sollten ohne Lücken und Überschneidungen zusammenpassen. Alle Details müssen vollständig als Körper modelliert und mit den benachbarten Flächen verschmolzen sein.

Schritt c.: In diesem Schritt geht es um das Bereitstellen des Datensatzes [DS], der die 3-dimensionale Form einer zu fertigenden Austrittsdüse 251 beschreibt. Das Bereitstellen kann zum Beispiel bei allen Ausführungsformen erfolgen, indem der Datensatz [DS] am Ende des Schritts b. in einem (Zwischen-)Speicher gelegt wird, um dort dann (später) von einer Maschine 200 geholt zu werden.

Das Bereitstellen kann zum Beispiel bei allen Ausführungsformen erfolgen, indem die Rohdaten DS des Datensatzes in ein geeignetes Datenformat [DS] transformiert werden.

Das Bereitstellen kann zum Beispiel bei allen Ausführungsformen erfolgen, indem die Rohdaten DS und/oder der Datensatz [DS] an einen weiteren Prozess oder an eine weitere Software übergeben wird.

In Fig. 4 ist schematisch dargestellt, dass der Datensatz [DS] über eine Kommunikationsverbindung K1 von dem Rechner 150 zur Verwendung durch eine materialabscheidende Maschine 200 bereitgestellt wird.

Schritt d.: In diesem Schritt geht es um das Verwenden des Datensatzes [DS], um eine Austrittsdüse 251 mittels eines nummerisch kontrollierten Fertigungsverfahrens herzustellen.

Vorzugsweise kommt bei allen Ausführungsformen als nummerisch kontrolliertes Fertigungsverfahren ein materialabscheidendes Verfahren zum Einsatz. Besonders bevorzugt sind 3D-Druckverfahren. In Fig. 3 ist das Symbol einer materialabscheidenden Maschine 200 gezeigt. Eine solche Maschine 200 kann z.B. mindestens einen (Druck-)Kopf 201, Mittel 202 zum Bewegen des (Druck-)Kopfs 201 und einen Bereich 203 zum Fertigen eines Bauteils umfassen. Weiterhin kann eine Schnittstelle 204 vorgesehen sein, um den Datensatz [DS] (z.B. über einen Kommunikationsverbindung K1) zu empfangen.

Die Verwendung eines 3D-Druckers als materialabscheidende Maschine 200 hat den Vorteil, dass dieser mehrere einzelne Objekte gleichzeitig fertigen kann, sogar wenn diese Objekte ineinander stecken. Außerdem hat das 3D-Drucken den Vorteil, dass das aufwendige Herstellen von Formen und das Wechseln von Formen entfällt. Ein 3D-Druckverfahren kann daher (in den meisten Fällen) automatisch und ohne manuelle Intervention betrieben werden. Heutige 3D-Drucker haben weiterhin den Vorteil, dass sie komplexe 3-dimensionalen Formen fertigen können, die z.B. mit existierenden Fräszentren nicht herstellbar sind.

3D-Drucker werden immer präziser und können sogar mit mehreren Farben oder Materialien drucken. Die typischen Datensätze (wie z.B. das Stereolithography-Format; STL), können unterschiedliche Materialen und Farben nicht abbilden. Falls zum Fertigen also eine Maschine 200 eingesetzt werden soll, die unterschiedliche Materialen und Farben verarbeiten kann, so sollte bei allen Ausführungsformen ein Datensatz [DS] verwendet werden, der auch die Farb- und Materialinformationen enthält. Zu diesem Zweck kann bei allen Ausführungsformen z.B. das Additive Manufacturing File Format (AMF) oder das 3MF-Format verwendet werden.

Werkstoffe, die im Rahmen der Erfindung bei allen Ausführungsformen zum Einsatz kommen können, sind Kunststoffe, Kunstharze, Keramiken und Metalle, sowie Kombinationen von zwei oder mehreren dieser Materialien.

Um den Druckvorgang, das Entfernen aus dem Pulverbad, das Abstauben und Infiltrieren zu überstehen, muss ein Modell entsprechend robust ausgelegt sein. Für Objekte, die mit einem 3D-Drucker hergestellt werden sollen, beträgt die Mindeststärke für nicht-tragende Elemente vorzugsweise bei allen Ausführungsformen 1 mm. Elemente mit leichter Belastung sollten etwa doppelt so dick sein. Die Mindeststärke der Hauptstrukturen des Körpers der Austrittsdüse 251 sollte dicker sein, da die Austrittsdüse 251 unter Fluiddruck steht und von dem Fluid durchströmt wird.

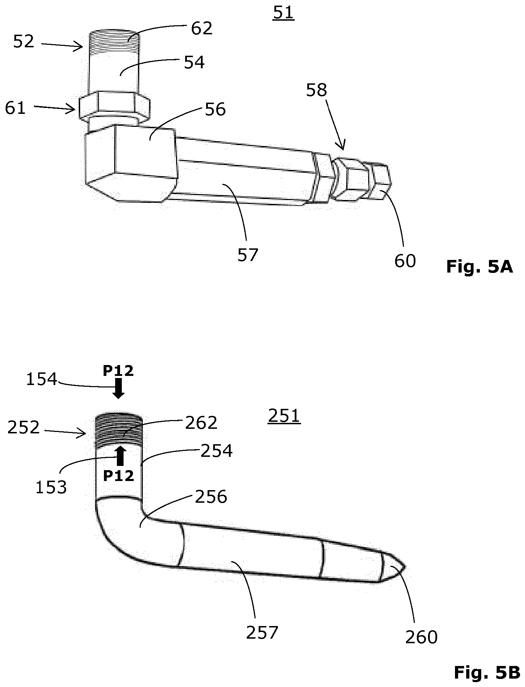

In den Figuren 5A und 5B werden eine konventionelle Austrittsdüse 50 (Fig. 5A) einer Austrittsdüse 250 der Erfindung gegenüber gestellt. Beide Düsen 50, 250 wurden für denselben Einsatzzweck zusammengebaut bzw. individuell angefertigt.

Im Folgenden wird auf Fig. 5A Bezug genommen. Ausgehend von der Andockstelle 52 (die z.B. zum Ankoppeln an eine Ringleitung 53 ausgelegt ist), kann eine konventionelle Austrittsdüse 50 z.B. die folgenden Elemente umfassen: ein Leitungsstück 54 mit Aussengewinde 62; ein Knieelement 56, das mittels einer Überwurfmutter 61 an dem Leitungsstück 54 befestigt ist; ein weiteres Leitungsstück 57, das mit dem Knieelement 56 verbunden ist; ein Düsenkopf 60, der mittels einer Schraubverbindung 58 mit dem Leitungsstück 57 verschraubt ist.

Im Folgenden wird auf Fig. 5B Bezug genommen. Ausgehend von der Andockstelle 252 (die z.B. zum Ankoppeln an eine Ringleitung 253 ausgelegt ist), kann eine Austrittsdüse 250 der Erfindung z.B. die folgenden Elemente umfassen: einen Leitungsabschnitt 254 mit Aussengewinde 262; ein Knieabschnitt 256, der in den Leitungsabschnitt 254 übergeht; ein weiterer Leitungsabschnitt 257, der in das Knieelement 56 übergeht; ein Düsenkopf 260, der am Ende des Leitungsabschnitt 257 ausgebildet ist.

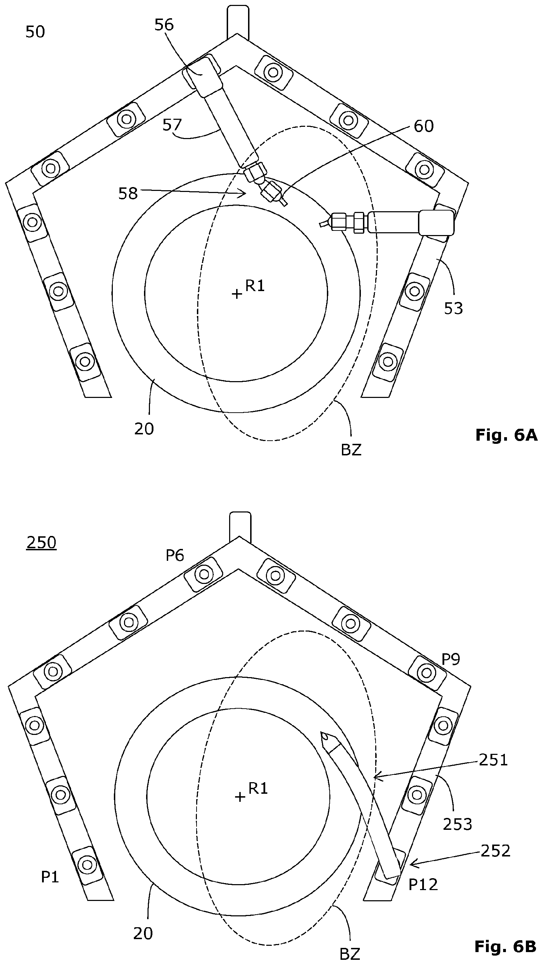

In den Figuren 6A und 6B werden eine konventionelle Fluidzufuhrvorrichtung 50 mit zwei Austrittsdüsen 51 des Standes der Technik (Fig. 6A) einer Fluidzufuhrvorrichtung 250 mit einer speziell angefertigten Austrittsdüse 251 der Erfindung gegenüber gestellt. Die Austrittsdüse 251 wurde für den gewünschten Einsatzzweck nach den Schritten der Erfindung individuell angefertigt. Die beiden Ringleitungen 53 bzw. 253 der Figuren 6A und 6B sind identisch.

Vorzugsweise zeichnen sich die individuell gefertigten Austrittsdüsen 251 der Erfindung dadurch aus, dass sie einstückig sind. D.h. die Austrittsdüsen 251 der Erfindung bestehen vorzugsweise bei allen Ausführungsformen nur aus einem Teil, das jedoch (je nach Verfahren) aus unterschiedlichen Materialen gefertigt worden sein kann.

Die Austrittsdüsen 251 der Erfindung können bei allen Ausführungsformen auch einen Rohling (z.B. RH1 oder RH2) umfassen, der z.B. in einem Teilschritt des Schritts b. ausgewählt wurde (siehe auch Fig. 7).

Der Rohling (z.B. RH1 oder RH2) kann bei allen Ausführungsformen z.B. die (standardisierten) Elemente (z.B. ein Innen- oder Aussengewinde, oder eine Steck- oder Schraubkupplung 259) umfassen, die zum Verbinden (Koppeln) der Austrittsdüse 251 mit einer Ringleitung 253 oder mit einer anderen Leitung ausgelegt sind. In diesem Fall wird der Rohling (z.B. RH1 oder RH2) durch das nummerisch kontrollierte Fertigungsverfahren im Schritt d. modifiziert (z.B. durch CNC-gesteuertes Fräsen) oder der Rohling (z.B. RH1 oder RH2) wird in eine materialabscheidende Maschine 200 eingebracht und mit zusätzlichem Material versehen (siehe auch Fig. 7).

Anhand der Fig. 7 werden weitere Details der Erfindung erläutert. Es handelt sich um eine Darstellung einer bevorzugten Ausführungsform in der Art eines Flussdiagramms. Die Software SW kann über eine Kommunikationsverbindung K4 (z.B. über eine rechnerinterne Verbindung im Rechner 150 oder in der Bearbeitungsmaschine 100) Information aus dem Schritt a. erhalten. Aus einem Speicher 151 können Rohlinge RH1 und RH2 zur Auswahl angeboten werden. Die Software SW kann eine Auswahl selbsttätig vornehmen (unter Berücksichtigung der Information des Schritts a.), oder der Benutzer kann eine geeignete Auswahl treffen (z.B. unter Berücksichtigung des Lagerbestandes an verschiedenen Rohlingen RH1, RH2).

Bei der in Fig. 7 gezeigten Ausführungsform werden zwei Rohlinge RH1 und RH2 zur Auswahl angeboten, die sich lediglich in der Länge unterscheiden. Für kurze Austrittsdüsen 251 würde man somit den Rohling RH1 und für längere Austrittsdüsen 251 den Rohling RH2 wählen.

Nun wird im Schritt b. mit Rechnerunterstützung die 3-dimensionale Form und Position einer spezifisch angepassten Austrittsdüse 251 definiert. Das kann, wie in Fig. 7 gezeigt, durch die Software SW erfolgen. Die Software SW kann dann einen geeigneten Datensatz [DS] über eine Kommunikationsverbindung K1 zur Verwendung durch eine materialabscheidende Maschine 200 bereit stellen.

In Fig. 7 ist weiterhin schematisch angedeutet, dass sich der Rohling (hier wurde der Rohling RH1 ausgewählt) in der Maschine 200 in dem Bereich 203 befindet, wo er einer materialabscheidenden Bearbeitung unterzogen wird. Unterhalb der Maschine 200 ist in Fig. 7 in rein schematischer Form eine Austrittsdüse 251 als Beispiel gezeigt. Man kann erkennen, dass sich der Rohling RH1 ein Stück weit in das Innere eines Leitungsabschnitts 257 erstreckt. Der Leitungsabschnitt 257 geht hier in einen Knieabschnitt 256 über, der in einem Düsenkopf 260 mündet.

In Fig. 8 ist eine weitere Ausführungsform einer Austrittsdüse 251 schematisch angedeutet. Die Austrittsdüse 251 ist in Fig. 8 von unten (d.h. mit Blick auf den Düsenschlitz 263) gezeigt. Im Bereich der Andockstelle 252 umfasst diese Austrittsdüse 251 eine Steckkupplung 259. Der Düsenkopf 260 umfasst einen länglichen Düsenschlitz 263, der dazu ausgelegt ist den austretenden Fluidstrahl aufzuspreitzen.

Das Verfahren zum Bereitstellen einer Fluidzufuhrvorrichtung 250, die speziell zur Verwendung in einer Bearbeitungszone BZ einer Bearbeitungsmaschine 100 ausgelegt ist, umfasst vorzugsweise die folgende Schritte:
a. Rechnergestütztes Definieren der 3-dimensionalen Konfiguration der Bearbeitungszone BZ unter Berücksichtigung des Werkstücks 30 und des Werkzeugs 20, das zum Bearbeiten des Werkstücks 30 in der Bearbeitungszone BZ der Bearbeitungsmaschine 100 verwendet werden soll,
b. Rechnergestütztes Definieren der 3-dimensionalen Form und der Position mindestens einer spezifisch angepassten Austrittsdüse 251 der Fluidzufuhrvorrichtung 250 unter Einbeziehung von Information, die im Schritt a. definiert wurde,
c. Bereitstellen eines Datensatzes (DS; [DS]), der die 3-dimensionale Form dieser Austrittsdüse 251 beschreibt,
d. Verwenden des Datensatzes (DS; [DS]), um diese Austrittsdüse 251 mittels eines nummerisch kontrollierten Fertigungsverfahrens (z.B. in einer materialabscheidenden Maschine 200 und/oder in einer materialabtragenden Maschine 300) herzustellen.

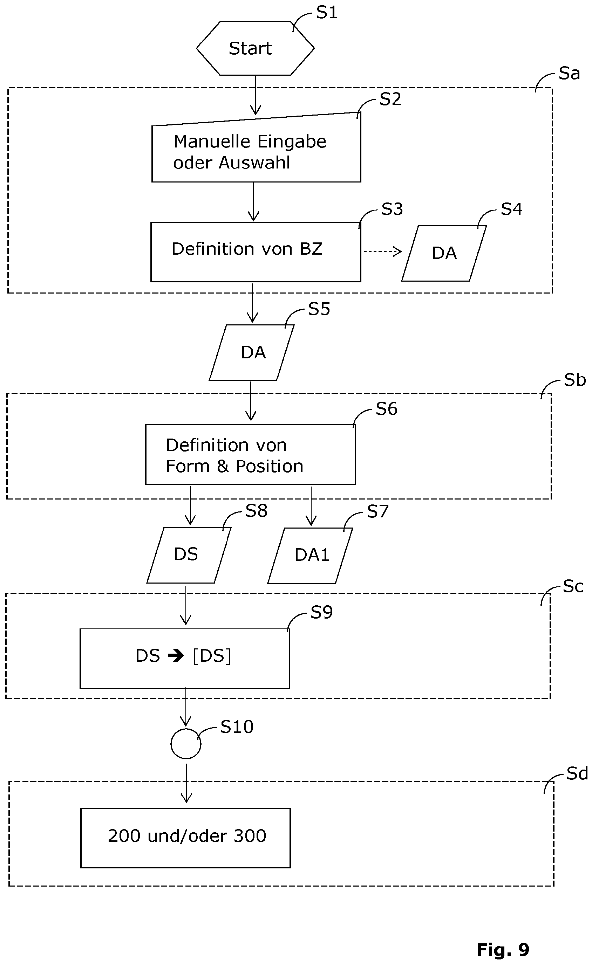

Konkret kann das Verfahren bei allen Ausführungsformen die folgenden Teilschritte/Prozesse umfassen, wie in Fig. 9 gezeigt.

Nach dem Start einer entsprechenden (Software-)Anwendung (Schritt S1) auf einem Rechner 150 oder in der Maschine 100, kann der Nutzer z.B. zur Eingabe von Information oder zur Auswahl von Information aufgefordert werden (Schritt S2). Stattdessen, kann dieser Schritt S2 auch automatisiert erfolgen (z.B. indem der Maschine 100 die entsprechende Information auf anderem Wege zur Verfügung steht).

Dann folgt die eigentliche Definition der Bearbeitungszone BZ (Schritt S3). Vorzugsweise wird der Schritt S3 automatisch durchgeführt, wobei (je nach Ausführungsform) statische und/oder dynamische Kollisionsinformation berücksichtigt werden kann.

Optional können im Schritt S4 die so gewonnenen Daten DA (zwischen) gespeichert werden. Die so gewonnenen Daten DA werden für den 6. Schritt zur Verfügung gestellt (Schritt S5).

Im Rahmen des 6. Schritts werden sowohl die Form als auch die Position der zu fertigenden Austrittsdüse 251 definiert (rechnerisch ermittelt). Im Rahmen des 6. Schritts wird unter anderem die Information berücksichtigt, die im Schritt S5 zur Verfügung gestellt wurde. Falls die Austrittsdüse 251 an einer Ringleitung 253 befestigt werden soll, so kann die Position z.B. eine Portnummer (z.B. P1 bis P12) und eine Winkelangabe umfassen. Bei dem Beispiel in Fig. 6B, könnte die Position z.B. wie folgt definiert sein: P12:355. P12 bezeichnet den 12. Port der Ringleitung 253 und die Zahl 355 steht für 355 Grad (gemessen im Uhrzeigersinn, wobei 0 Grad der 12 Uhr-Position, 180 Grad der 18 Uhr-Position und 360 Grad erneut der 12 Uhr-Position entspricht). Die Position kann bei allen Ausführungsformen z.B. als Datensatz DA1 zur Verfügung gestellt werden (Schritt S7).

Die 3-dimensionale Form der Austrittsdüse 251 kann, wie bereits erwähnt, z.B. durch einen geschlossenflächigen Körper definiert werden, der sich aus eine großen Anzahl kleiner Facetten zusammensetzt. Letztendlich kann die Definition der 3-dimensionalen Form z.B. einen Datensatz DS liefern (Schritt S8).

Die 3-dimensionale Form, die ermittelt wurde, ist in dem Datensatz DS kodifiziert oder sie ist durch den Datensatz DS definiert. Der Schritt S8 entspricht dem Schritt des Bereitstellens des Datensatzes DS. Dieser Datensatz DS kann in der gegenwärtigen Form zur weiteren Verwendung bereitgestellt werden, oder er kann z.B. in ein anderes Format [DS] umgewandelt werden (Schritt S9). Der Schritt S9 ist optional.

Der Schritt S10 repräsentiert das Bereitstellen des Datensatzes DS oder [DS]. An der entsprechenden Stelle im Flussdiagramm der Fig. 9 setzt das nummerisch kontrollierte Fertigungsverfahren 200 und/oder 300 an.

Vorzugsweise wird bei allen Ausführungsformen die Position (z.B. in Form des Datensatzes DA1) auch im 9. Schritt verwendet, und zwar um die Austrittsdüse 251 mit einer entsprechenden Information zu versehen. In Fig. 5B ist dies beispielhaft wie folgt illustriert. An dem Körper der Austrittsdüse 251 kann z.B. ein Pfeil 153 mit der Beschriftung P12 angebracht werden (was z.B. auch im Rahmen des 3D-Druckens oder durch Fräsen geschehen kann). An der Ringleitung 253 kann an jeden Port eine Portnummer von 1 bis 12 und eine weiterer Pfeil 154 vorgesehen sein, wie in Fig. 5B angedeutet. Der Nutzer der Erfindung kann nun durch Prüfen der speziell gefertigten Austrittsdüse 251 erkennen, dass diese Austrittsdüse 251 am Port P12 der Ringleitung 253 angekoppelt werden soll und dass beim Ausrichten der Austrittsdüse 251 relativ zur Ringleitung 253 die beiden Pfeile 153 und 154 fluchtend zueinander stehen müssen. Damit kann die Austrittsdüse 251 problemlos und zuverlässig an der richtigen Position und in der richtigen Orientierung befestigt werden.

In diesem Beispiel umfasst also der Datensatz DS oder [DS] nicht nur die Daten zur Form der Austrittsdüse 251 sondern auch Angaben zur Beschriftung oder Kennzeichnung der Austrittsdüse 251.

**Bezugszeichenliste**

| | |
|---|---|
| Werkzeug | 20 |
| Werkzeugspindel | 21 |
| | |
| Werkstück / zu bearbeitendes Bauteil | 30 |
| | |
| Fluidzufuhrvorrichtung | 50 |
| Austrittsdüse | 51 |
| Andockstelle | 52 |
| Ringleitung | 53 |
| Leitungsstück | 54 |
| Schraubverbindung | 55 |
| Knielement | 56 |
| Leitungsstück | 57 |
| Schraubverbindung | 58 |
| Steck- oder Schraubkupplung | 59 |
| Düsenkopf | 60 |
| Überwurfmutter | 61 |
| Aussengewinde | 62 |
| | |
| Bearbeitungsmaschine | 100 |
| Werkzeuqträqer | 101 |
| Maschinenbett | 102 |
| Werkstückspindel | 103 |
| | |
| Rechner | 150 |
| Speicher | 151 |
| Speicherzugriff/Bus | 152 |
| Pfeil | 153 |
| | |
| materialabscheidende Maschine | 200 |
| (Druck-)Kopf | 201 |
| Mittel zum Bewegen des (Druck-)Kopfs | 202 |
| Bereich | 203 |
| Schnittstelle | 204 |
| | |
| Austrittsdüse | 251 |
| Andockstelle | 252 |
| | |
| Leitungsabschnitt | 254 |
| Knieabschnitt | 256 |
| | |
| Leitungsabschnitt | 257 |
| | |
| Steck- oder Schraubkupplung | 259 |
| Düsenkopf | 260 |
| | |
| Aussengewinde | 262 |
| Düsenschlitz | 263 |
| | |
| Bearbeitungszone | BZ |
| Schwenkachse | C |
| Computerized Numerical Control | CNC |
| Daten | DA, DA1 |
| Rohdaten | DS |
| Datensatz | [DS] |
| Kommunikationsverbindungen | K1, K2, K3, K4 |
| Portnummer | P1 - P12 |
| Werkzeug achse | R1 |
| Werkstückachse | R2 |
| Horizontalachse | R3 |
| Rohlinge | RH1, RH2 |
| Verfahrensschritte | S1, S2, S3, etc. |
| Schritt a. | Sa |
| Schritt b. | Sb |
| Schritt c. | Sc |
| Schritt d. | Sd |
| Software(-modul) | SW |
| Linearachse | X |
| Linearachse | Y |
| Linearachse | Z |
| Rotationsbewegung des Werkzeugs | ω1 |
| Rotationsbewequnq des Werkstücks | ω2 |

## Patentansprüche

1. Verfahren zum Bereitstellen einer Fluidzufuhrvorrichtung (250), die speziell zur Verwendung in einer Bearbeitungszone (BZ) einer Bearbeitungsmaschine (100) ausgelegt ist, um ein Fluid in Richtung eines Wechselwirkungsbereichs zwischen einem Werkzeug (20) und einem Werkstück (30) abzugeben, mit den folgenden Schritten:
a. Rechnergestütztes Definieren (Sa) der 3-dimensionalen Konfiguration der Bearbeitungszone (BZ) unter Berücksichtigung des Werkstücks (30) und des Werkzeugs (20), das zum Bearbeiten des Werkstücks (30) in der Bearbeitungszone (BZ) der Bearbeitungsmaschine (100) verwendet werden soll,
b. Rechnergestütztes Definieren (Sb) der 3-dimensionalen Form und der Position mindestens einer spezifisch angepassten Austrittsdüse (251) der Fluidzufuhrvorrichtung (250) unter Einbeziehung von Information, die im Schritt a. definiert wurde,
c. Bereitstellen (Sc) eines Datensatzes (DS; [DS]), der die 3-dimensionale Form dieser Austrittsdüse (251) beschreibt,
d. Verwenden (Sd) des Datensatzes (DS; [DS]), um diese Austrittsdüse (251) mittels eines nummerisch kontrollierten Fertigungsverfahrens (200, 300) herzustellen.

2. Verfahren nach Anspruch 1, **dadurch gekennzeichnet, dass** es sich bei dem nummerisch kontrollierten Fertigungsverfahren (200) um ein materialabscheidendes Verfahren handelt, wobei es sich vorzugsweise um ein 3D-Druckverfahren handelt.

3. Verfahren nach Anspruch 1 oder 2, **dadurch gekennzeichnet, dass** im Rahmen des Schritts b. sowohl die statische als auch die dynamische Relativposition des Werkstücks (20) und des Werkzeugs (30) berücksichtigt werden.

4. Verfahren nach Anspruch 3, **dadurch gekennzeichnet, dass** im Rahmen des Schritts b. eine Kollisionsermittlung vorgenommen wird, um die 3-dimensionale Form der Austrittsdüse (251) so zu definieren, dass es bei der Verwendung der Austrittsdüse (251) in der Bearbeitungszone (BZ) nicht zu einer Kollision kommt.

5. Verfahren nach Anspruch 3, **dadurch gekennzeichnet, dass** im Rahmen des Schritts b. eine Strömungsbetrachtung vorgenommen wird, um die 3-dimensionale Form der Austrittsdüse (251) so zu definieren, dass das Fluid in Form eines direkten Fluidstrahls in Richtung des Wechselwirkungsbereichs zwischen dem Werkzeug (20) und dem Werkstück (30) abgebbar ist.

6. Verfahren nach Anspruch 1, 2 oder 3, **dadurch gekennzeichnet, dass** aus einem Speichermedium (151) und/oder über eine Kommunikationsverbindung (152) mindestens ein auswählbarer Rohling (RH1, RH2) einer Austrittsdüse (251) bereitgestellt wird und wobei im Schritt d. der ausgewählte Rohling (RH1, RH2) in eine Fertigungsmaschine eingebracht und durch das nummerisch kontrollierte Fertigungsverfahren (200, 300) angepasst oder ergänzt wird.

7. Verfahren nach Anspruch 1 oder 2, **dadurch gekennzeichnet, dass** der Datensatz (DS; [DS]) an eine Fertigungsmaschine übergeben wird, die sich an einem anderen Standort befindet als ein Rechner (150) oder als die Bearbeitungsmaschine (100), auf dem bzw. in der die Schritte a. bis c. durchgeführt wurden.

8. Verfahren nach Anspruch 1 oder 2, **dadurch gekennzeichnet, dass** die Austrittsdüse (251) im Schritt d. oder in einem weiteren Verfahrensschritt mit einer Kennzeichnung (153) versehen wird, um die Montage der Austrittsdüse (251) zu unterstützen.

9. Verwendung mindestens einer Austrittsdüse (251), die nach einem Verfahren der Ansprüche 1 - 8 bereitgestellt wurde, als Teil der Fluidzufuhrvorrichtung (250) einer Bearbeitungsmaschine (100).

## Claims

1. A method for providing a fluid supply device (250), which is especially designed for use in a machining zone (BZ) of a machine tool (100), in order to discharge a fluid in the direction of an interaction region between a tool (20) and a workpiece (30), comprising the following steps:
a. computer-assisted definition (Sa) of the 3-dimensional configuration of the machining zone (BZ) in consideration of the workpiece (30) and the tool (20) which is to be used for machining the workpiece (30) in the machining zone (BZ) of the machine tool (100),
b. computer-assisted definition (Sb) of the 3-dimensional shape and the position of at least one specifically adapted outlet nozzle (251) of the fluid supply device (250) with incorporation of information which was defined in step a.,
c. provision (Sc) of a dataset (DS; [DS]), which describes the 3-dimensional shape of this outlet nozzle (251),
d. use (Sd) of the dataset (DS; [DS]), to produce this outlet nozzle (251) by means of a numerically controlled manufacturing method (200, 300).

2. The method according to claim 1, **characterized in that** the numerically controlled manufacturing method (200) is a material-depositing method, wherein it is preferably a 3D printing method.

3. The method according to claim 1 or 2, **characterized in that** in the scope of step b., both the static and also the dynamic relative position of the workpiece (20) and the tool (30) are taken into consideration.

4. The method according to claim 3, **characterized in that** in the scope of step b., a collision ascertainment is performed to define the 3-dimensional shape of the outlet nozzle (251) such that a collision does not occur in the machining zone (BZ) during the use of the outlet nozzle (251).

5. The method according to claim 3, **characterized in that** in the scope of step b., a flow observation is performed to define the 3-dimensional shape of the outlet nozzle (251) such that the fluid can be discharged in the form of a direct fluid jet in the direction of the interaction region between the tool (20) and the workpiece (30).

6. The method according to claim 1, 2, or 3, **characterized in that** at least one selectable blank (RH1, RH2) of an outlet nozzle (251) is provided from a storage medium (251) and/or via a communication connection (152), and wherein in step d., the selected blank (RH1, RH2) is introduced into a manufacturing machine and adapted or supplemented by the numerically controlled manufacturing method (200, 300).

7. The method according to claim 1 or 2, **characterized in that** the dataset (DS; [DS]) is transferred to a manufacturing machine, which is located at a different location than a computer (150) or than the machine tool (100), on which or in which steps a. to c. were carried out.

8. The method according to claim 1 or 2, **characterized in that** the outlet nozzle (251) is provided in step d. or in a further method step with an identifier (153), to assist the installation of the outlet nozzle (251).

9. A use of at least one outlet nozzle (251), which was provided according to a method of claims 1-8, as part of the fluid supply device (250) of a machine tool (100).

## Revendications

1. Procédé pour fournir un dispositif d'alimentation de fluide (250) spécialement conçu pour être utilisé dans une zone d'usinage (BZ) d'une machine d'usinage (100) pour amener un fluide en direction d'une zone d'interaction entre un outil (20) et une pièce à usiner (30), comprenant les étapes suivantes :
a. définir par informatique (Sa) la configuration tridimensionnelle de la zone d'usinage (BZ) en tenant compte de la pièce à usiner (30) et de l'outil (20) qui doit être utilisé pour usiner la pièce à usiner (30) dans la zone d'usinage (BZ) de la machine d'usinage (100),
b. définir par informatique (Sb) la forme tridimensionnelle et la position d'au moins une buse de sortie (251) spécialement adaptée du dispositif d'alimentation de fluide (250) en tenant compte de l'information qui a été définie à l'étape a.,
c. fournir (Sc) un jeu de données (DS ; [DS]) qui décrit la forme tridimensionnelle de cette buse de sortie (251),
d. utiliser (Sd) le jeu de données (DS ; [DS]) pour fabriquer cette buse de sortie (251) à l'aide d'un procédé de fabrication à commande numérique (200, 300).

2. Procédé selon la revendication 1, **caractérisé en ce que** le procédé de fabrication à commande numérique (200) est un procédé par dépôt de matière, et est de préférence un procédé d'impression 3D.

3. Procédé selon la revendication 1 ou 2, **caractérisé en ce que**, au cours de l'étape b., il est pris en compte à la fois la position relative statique et dynamique de la pièce à usiner (20) et de l'outil (30).

4. Procédé selon la revendication 3, **caractérisé en ce que**, au cours de l'étape b., il est procédé à une détection des collisions pour définir la forme tridimensionnelle de la buse de sortie (251) de sorte qu'il ne se produise pas de collision lors de l'utilisation de la buse de sortie (251) dans la zone d'usinage (BZ).

5. Procédé selon la revendication 3, **caractérisé en ce que**, au cours de l'étape b., il est procédé à une analyse de l'écoulement pour définir la forme tridimensionnelle de la buse de sortie (251) de telle sorte que le fluide puisse être distribué sous la forme d'un jet de fluide direct en direction de la zone d'interaction entre l'outil (20) et la pièce à usiner (30).

6. Procédé selon la revendication 1, 2 ou 3, **caractérisé en ce qu'**il est fourni depuis un support de stockage (151) et/ou par le biais d'une liaison de communication (152) au moins une ébauche sélectionnable (RH1, RH2) d'une buse de sortie (251), et dans lequel, à l'étape d., l'ébauche sélectionnée (RH1, RH2) est amenée dans une machine de fabrication et est ajustée ou complétée par le procédé de fabrication à commande numérique (200, 300).

7. Procédé selon la revendication 1 ou 2, **caractérisé en ce que** le jeu de données (DS ; [DS]) est transmis à une machine de fabrication qui se trouve à un endroit différent de l'ordinateur (150) ou de la machine d'usinage (100) sur lequel ou laquelle ont été réalisées les étapes a. à c.

8. Procédé selon la revendication 1 ou 2, **caractérisé en ce que** la buse de sortie (251), lors de l'étape d. ou au cours d'une autre étape, est munie d'un marquage (153) pour faciliter le montage de la buse de sortie (251).

9. Utilisation d'au moins une buse de sortie (251) qui a été fournie conformément à un procédé selon les revendications 1 à 8, comme partie du dispositif d'alimentation de fluide (250) d'une machine d'usinage (100).
